(19) Europäisches Patentamt
European Patent Office
Office européen des brevets

(11) **EP 3 344 506 B1**

(12) **FASCICULE DE BREVET EUROPEEN**

(45) Date de publication et mention
de la délivrance du brevet:
**17.07.2019 Bulletin 2019/29**

(21) Numéro de dépôt: **16775272.4**

(22) Date de dépôt: **29.08.2016**

(51) Int Cl.:
**B62D 15/02** *(2006.01)*        **B60W 50/00** *(2006.01)*
**B60W 30/12** *(2006.01)*

(86) Numéro de dépôt international:
**PCT/FR2016/052137**

(87) Numéro de publication internationale:
**WO 2017/037374 (09.03.2017 Gazette 2017/10)**

(54) **DISPOSITIF ET PROCEDE DE CORRECTION DE TRAJECTOIRE D'UN VEHICULE AUTOMOBILE**

VORRICHTUNG UND VERFAHREN ZUR KORREKTUR DER FAHRTRICHTUNG EINES
KRAFTFAHRZEUGS

DEVICE AND METHOD FOR CORRECTING THE DIRECTION OF TRAVEL OF A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.09.2015 FR 1558107**

(43) Date de publication de la demande:
**11.07.2018 Bulletin 2018/28**

(73) Titulaire: **Renault S.A.S.
92100 Boulogne-Billancourt (FR)**

(72) Inventeurs:
• **MINOIU-ENACHE, Nicoleta
78000 Versailles (FR)**
• **DO, Anh Lam
92370 Chaville (FR)**

(56) Documents cités:
**WO-A1-2014/006327      WO-A2-2013/178899
FR-A1- 2 991 276**

**Description**

L'invention concerne un procédé de correction de trajectoire d'un véhicule automobile destiné au maintien du véhicule dans sa voie de circulation, ainsi qu'un dispositif de correction de trajectoire d'un véhicule associé.

L'invention trouve une application particulièrement avantageuse dans le domaine de la sécurité et le domaine d'aide à la conduite de véhicules automobiles.

Certains véhicules sont dotés d'un système de direction qui comporte une fonction pilotant, par un calculateur de contrôle, un actionneur qui agit sur cette direction, pour réaliser une aide au suivi de la voie de circulation, susceptible d'indiquer au conducteur un écart par rapport à la voie normale de circulation, en particulier dans des cas de manque de vigilance, d'endormissement ou malaise. Ces fonctions d'aide à la conduite sont connues sous la terminologie « Lane Departure Avoidance » ou « Lane Keeping Assist » (LKA).

La réalisation de ces fonctions repose notamment sur la mesure de la position du véhicule par rapport à sa voie de circulation et, en particulier sur la mesure de l'écart latéral du véhicule par rapport à des marquages latéraux au sol délimitant la voie sur laquelle circule le véhicule et sur la mesure de l'angle de cap relatif du véhicule. Typiquement, ces mesures sont réalisées à l'aide d'une caméra embarquée à l'avant du véhicule et au moyen d'algorithmes de traitement d'image associés à la caméra, capables de détecter les lignes blanches au sol et de fournir l'écart latéral du véhicule par rapport à ces lignes blanches et l'angle de cap relatif du véhicule.

Or, un problème important pour réaliser les fonctions actives de « Lane Keeping Assist » et « Lane Departure Avoidance » est d'assurer une bonne réponse dynamique du véhicule compte tenu des difficultés suivantes liées au fait que la variation de la vitesse ou la courbure de la route peuvent être significatives, ou encore que l'erreur initiale par rapport à la trajectoire cible peut être importante.

Le document de brevet EP1790512 présente un système d'évitement de sortie de voie en se basant uniquement sur le freinage différentiel des roues. Cette action est limitée par la saturation des pneus et ne peut pas assurer un suivi de voie en permanence. De plus, aucune indication sur le confort des passagers pendant la correction n'est donnée.

Le document de brevet KR100851120 propose un système de contrôle des roues arrière par le freinage différentiel pour garder le véhicule dans sa voie. Ce système présente les mêmes inconvénients que le système précédent.

Le document de brevet US7580785 décrit un système LKA qui fonctionne conjointement avec un système qui assure la stabilité dynamique à travers des actions sur la colonne de direction, en tenant compte de l'apport de motricité des roues (différentiel piloté) et d'un freinage différentiel des roues.

La publication « Prédictive Active Steering Control for Autonomous Vehicle Systems » Paolo Falcone, Francesco Borrelli, Jahan Asgari, Hongtei Eric Tseng et Davor Hrovat, IEEE TRANSACTIONS ON CONTROL SYSTEMS TECHNOLOGY, VOL. 15, NO. 3, MAY 2007, pages 566-580, présente une méthode pour réaliser la fonction LKA par un contrôle prédictif.

Le document de brevet WO 2014/006327 décrit un dispositif de contrôle de la trajectoire d'un véhicule comprenant un module d'élaboration en temps réel d'une consigne d'action stabilisante applicable sur le véhicule en multipliant un vecteur d'état du véhicule par un gain à chaque instant d'échantillonnage, et un module de production du gain adapté en temps réel à une plage de vitesse à laquelle appartient la vitesse du véhicule et au vecteur d'état en minimisant une somme d'au moins deux carrés d'écarts de trajectoire déduits du vecteur d'état.

Toutefois, aucune des méthodes de contrôle décrites précédemment ne prend en compte la trajectoire dynamique du véhicule sur la voie a priori dans la définition de la loi de commande de la fonction d'aide au maintien dans la voie. En particulier, ces méthodes ne garantissent pas de déplacement maximal sur la voie de circulation, ni d'angle maximal de braquage pendant la correction et ni une vitesse latérale maximale.

Aussi, l'invention a notamment pour but de remédier aux inconvénients de l'état de la technique en proposant un procédé de correction de trajectoire d'un véhicule corrigeant la trajectoire d'une manière optimisée et qui soit stable et robuste vis-à-vis des perturbations du système.

A cet effet, l'invention concerne un procédé de correction de trajectoire d'un véhicule automobile se déplaçant sur une voie de circulation, destiné au maintien du véhicule dans la voie, ledit procédé comprenant une étape de mesure de l'écart latéral du véhicule par rapport à un marquage sur la voie de circulation et une étape de mesure de l'angle de cap relatif correspondant à l'angle entre l'axe longitudinal du véhicule et une ligne de la voie de circulation, à partir d'au moins une caméra équipant le véhicule, et une étape de calcul d'au moins un gain de correction en fonction d'au moins l'écart latéral et de l'angle de cap relatif mesurés, et à partir duquel une consigne de commande à appliquer sur un actionneur agissant sur l'angle de braquage des roues avant directrices du véhicule est générée, le procédé étant caractérisé en ce que l'étape de calcul du gain de correction comprend une étape d'optimisation multicritères par recherche du minimum pour chacun des critères suivants parmi un déplacement latéral sur la voie de circulation, un angle de braquage aux roues du véhicule et la vitesse latérale du véhicule, pendant la correction de trajectoire.

Selon un premier mode de réalisation, au cours de l'étape de calcul, l'angle de braquage est minimisé sous la contrainte d'un angle de braquage maximal inférieur à une valeur maximale de saturation de l'angle de braquage.

Selon un deuxième mode de réalisation, au cours de l'étape de calcul, l'optimisation multicritères est effectuée avec un angle de braquage saturé à une valeur maximale de saturation de l'angle de braquage sous la contrainte d'une correction stable et robuste de la trajectoire.

Avantageusement, au cours de l'étape de calcul, le déplacement latéral est minimisé sous la contrainte d'un déplacement latéral maximal borné pendant la correction.

Avantageusement, au cours de l'étape de calcul, la vitesse latérale est minimisée sous la contrainte d'une vitesse latérale maximale bornée pendant la correction.

De préférence, le procédé comprend une étape de calibration du gain de correction en fonction d'au moins deux phases distinctes de correction de la trajectoire.

Selon un mode de réalisation, le procédé comprend l'utilisation du même gain de correction pour les deux phases de correction de la trajectoire et met en oeuvre une étape de pondérer le gain de correction avec un facteur de pondération pour l'une des deux phases de correction de la trajectoire.

En variante, le procédé comprend l'étape de calculer un gain de correction différent pour chacune des deux phases de correction de la trajectoire.

L'invention concerne également un dispositif de correction de la trajectoire d'un véhicule automobile se déplaçant sur une voie de circulation comprenant un système de direction actif agissant sur l'angle de braquage des roues avant directrices du véhicule, une caméra équipant le véhicule, associée à des moyens de traitement d'image pour fournir au moins une mesure de l'écart latéral du véhicule par rapport à un marquage sur la voie de circulation et une mesure de l'angle de cap relatif correspondant à l'angle entre l'axe longitudinal du véhicule et une ligne de la voie de circulation, une unité de contrôle pilotant le système de direction actif pour corriger la trajectoire en fonction d'un gain de correction calculé en fonction d'au moins l'écart latéral et de l'angle de cap relatif mesurés, et à partir duquel une consigne de commande à appliquer sur le système de direction actif est générée, caractérisé en ce qu'il comprend des moyens de calcul du gain de correction aptes à effectuer une optimisation multicritères par recherche du minimum pour chacun des critères suivants parmi un déplacement latéral sur la voie de circulation, un angle de braquage aux roues du véhicule et la vitesse latérale du véhicule, pendant la correction de trajectoire.

L'invention concerne encore un véhicule comprenant un dispositif selon l'invention.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :

- la Figure 1 est une représentation du modèle bicyclette appliqué à un véhicule circulant dans une voie ;
- la Figure 2 est un schéma représentant la stratégie de correction de trajectoire conforme à l'invention ;
- la Figure 3 est un schéma bloc des correcteurs mettant en oeuvre la correction de trajectoire selon l'invention ;
- la Figure 4 illustre une représentation de l'ensemble des points initiaux borné définissant la zone d'activation de la correction de trajectoire ;
- la Figure 5 et un schéma représentant la position des roues avant du véhicule sur la voie.

Les variables qui seront utilisés dans la suite de la description sont listées ci-après :

m (kg) : Masse totale du véhicule ;

$I_z$ (N.m): Inertie du véhicule autour d'un axe vertical passant par son centre de gravité CG ;

$l_f$ (m) : Distance de CG à l'essieu avant du véhicule ;

$l_r$ (m) : Distance de CG à l'essieu arrière du véhicule ;

a (m) : Moyenne des longueurs des essieux avant et arrière du véhicule ;

$c_f$ (N/rad) : Rigidité de dérive des roues avant ;

$c_r$ (N/rad) : Rigidité de dérive des roues arrière ;

$\delta_f$ (rad) : Angle de braquage des roues avant, soit l'angle que font les roues avant avec l'axe longitudinal du véhicule ;

r (rad/s) : Vitesse de lacet, soit la vitesse de rotation du véhicule autour de son centre de gravité CG suivant un axe vertical ;

$\Psi$ (rad/s) : Angle de cap du véhicule en repère absolu ;

$\Psi_d$ (rad/s) : Angle de cap de la tangente à la trajectoire de référence en repère absolu ;

$\Psi_L$ (rad/s) : Angle de cap relatif entre l'axe du véhicule et la tangente à la trajectoire de référence ;

$y_L^{CG}$ (m) : Ecart latéral entre l'axe de la voie et la tangente à la trajectoire au centre de gravité du véhicule ;

$y_L$ (m) : Ecart latéral entre l'axe de la voie et la tangente à la trajectoire en avant du véhicule ;

ls (m) : La distance de visée pour la mesure de l'écart latéral en avant du véhicule ;

$\beta$ (rad) : Angle de dérive, soit l'angle que fait le vecteur vitesse du véhicule avec son axe longitudinal ;

$(v_{CG})^v$ : Vecteur vitesse du véhicule au centre de gravité ;

v (m/s) : Vitesse du véhicule selon l'axe longitudinal ;

u (m/s) : Vitesse du véhicule selon l'axe transversal ;

$\rho_{ref}$ : Courbure de la voie ;

L (m) : Largeur de la voie de circulation ;

$\hat{\beta}$ (rad) : Angle de dérive calculé par un observateur ;

g : accélération gravitationnelle considérée comme égale à 9.81 m/s$^2$ ;

$\xi_v$ : paramètre décrivant la variation de vitesse à l'intérieur d'un intervalle $[v_{min} ; v_{max}]$ ;

K : vecteur réel de dimension 1x4 ;

P : matrice réelle de dimension 4x4, qui est positif défini et symétrique ;

Q : matrice réelle de dimension 4x4 qui est positif défini et symétrique, telle que Q=P$^{-1}$

Dans le but de modéliser le véhicule, on fait les hypothèses suivantes :

H1 : Les angles $\beta$ et $\delta_f$ sont petits, tels que sin(angle)≈angle et cos(angle) ≈1 ;

H2 : $(v_{CG})^v$ = v, v*(sin $\beta$), 0)$^T$ ≈ (v, v*$\beta$, 0)$^T$

H3 : Le véhicule roule à une vitesse longitudinale v constante ;

H4 : Les forces de contact latérales des pneus avant et arrière Fyf et Fyr sont linéaires avec les dérives des pneus et en fonction de la rigidité des pneus : $F_{yf}=c_f*\alpha_f$ et $F_{yr}=c_r*\alpha_r$.

H5 : $y_L$ ≈ $y_L^{CG}$ + ls* $\Psi_L$, où $\Psi_L = \Psi - \Psi$d

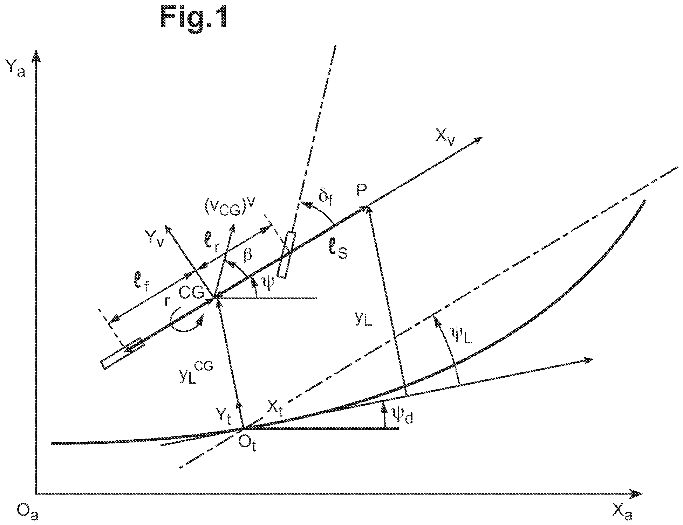

Partant des hypothèses ci-dessus, l'équation d'état du modèle « bicyclette » du véhicule retenu avec deux roues directrices, tel que représenté à la figure 1, est donnée ci-après par l'équation 1 suivante :

$$\begin{pmatrix} \dot{\beta} \\ \dot{r} \end{pmatrix} = \begin{pmatrix} a_{11} & a_{12} \\ a_{21} & a_{22} \end{pmatrix} \begin{pmatrix} \beta \\ \dot{r} \end{pmatrix} + \begin{pmatrix} b_{11} \\ b_{21} \end{pmatrix} \delta_f$$

$$a_{11} = -\frac{2(c_r + c_f)}{mv} , \quad a_{12} = -1 + \frac{2(l_r c_r - l_f c_f)}{mv^2}$$

$$a_{21} = \frac{2(l_r c_r - l_f c_f)}{I_z} , \quad a_{22} = -\frac{2(l_r^2 c_r + l_f^2 c_f)}{I_z v}$$

$$b_{11} = \frac{2c_f}{mv}$$

$$b_{21} = \frac{2c_f l_f}{I_z}$$

En référence à la figure 1, la trajectoire de référence est représentée dans un repère absolu {O$_a$, X$_a$, Y$_a$}. A chaque instant t, la position du véhicule est repérée par rapport à un point O$_t$ de la trajectoire qui constitue l'origine d'un repère relatif cinématique {O$_t$, X$_t$, Y$_t$} dans lequel l'axe X$_t$ est tangent à la trajectoire au point O$_t$. L'axe X t fait un angle $\Psi_d$ avec l'axe X$_a$ du repère absolu.

Lorsque le véhicule suit parfaitement sa trajectoire à l'instant t, le centre de gravité CG est confondu avec le point O$_t$ de la trajectoire. Ce n'est pas le cas lorsque le centre de gravité CG est déporté sur l'axe Y$_t$ dans le plan de la figure 1 qui est perpendiculaire à l'axe X$_t$.

Le centre de gravité CG constitue l'origine d'un repère relatif lié {CG, X$_v$, Y$_v$} au véhicule dans lequel l'axe X$_v$ est colinéaire à la barre à laquelle le véhicule est assimilé dans le modèle bicyclette. Le repère relatif lié {CG, X$_v$, Y$_v$} fait un angle $\Psi_L$ avec le repère relatif cinématique {O$_t$, X$_t$, Y$_t$}. La valeur de l'angle $\Psi_L$ est nulle dans le cas idéal où le véhicule est dirigé selon la tangente à la trajectoire. Dans le cas contraire, une valeur non nulle de l'angle $\Psi_L$ constitue un écart de trajectoire.

Par rapport au repère absolu {O$_a$, X$_a$, Y$_a$}, le centre de gravité CG se déplace à une vitesse V$_{CG}$ dont le vecteur, exprimé dans le repère relatif lié {CG, X$_v$, Y$_v$} fait un angle $\beta$ avec l'axe X$_v$.

On pourra se référer notamment aux demandes de brevet FR2992931, FR2991276 pour une présentation plus détaillée du modèle bicyclette, ainsi qu'à l'ouvrage « Vehicle Dynamics and Control » du Professeur Rajesh Rajamani, aux éditions Springer.

Les entrées de ce modèle sont l'angle de braquage des roues avant $\delta_f$, commandé, soit par l'action du conducteur, soit par l'action de la fonction de correction de trajectoire LKA, soit encore par la superposition des deux actions. Par ailleurs, pour l'angle de dérive $\beta$ du vecteur vitesse du véhicule, ce dernier peut être estimé par un observateur d'état suivant les principes exposés dans le document de brevet WO 2005/061305. En outre, la vitesse de lacet r est une mesure, qui peut être fournie par exemple par le gyroscope du véhicule.

L'erreur du véhicule par rapport à l'axe de la voie s'exprime en fonction de l'écart latéral $y_L$ en avant du véhicule et de son angle de cap relatif $\Psi_L$ par rapport à la tangente à l'axe de la voie, comme exprimé par l'équation 2 ci-dessous :

$$\dot{\psi}_L = r - v\rho_{ref}$$

$$\dot{y}_L = v\beta + l_s r + v\psi_L$$

L'angle de cap relatif $\Psi_L$ et l'écart latéral par rapport à l'axe de la voie en avant du véhicule $y_L$ peuvent être obtenus à partir de la caméra équipant le véhicule et sont fournis par des algorithmes de traitement d'image coopérant avec la caméra. La courbure de la route $\rho_{ref}$ sera considérée comme non mesurable et donc comme une perturbation.

A partir des équations 1 et 2 précédentes, on obtient le modèle suivant du véhicule et de son erreur par rapport à l'axe de la voie, défini par l'équation 3 suivante :

$$\begin{pmatrix} \dot{\beta} \\ \dot{r} \\ \dot{\Psi}_L \\ \dot{y}_L \end{pmatrix} = \begin{pmatrix} -\dfrac{2(c_r + c_f)}{mv} & -1 + \dfrac{2(l_r c_r - l_f c_f)}{mv^2} & 0 & 0 \\ \dfrac{2(l_r c_r - l_f c_f)}{I_z} & -\dfrac{2(l_r^2 c_r + l_f^2 c_f)}{I_z v} & 0 & 0 \\ 0 & 1 & 0 & 0 \\ v & l_S & v & 0 \end{pmatrix} \begin{pmatrix} \beta \\ r \\ \Psi_L \\ y_L \end{pmatrix} +$$

$$\begin{pmatrix} \dfrac{2c_f}{mv} \\ \dfrac{2l_f c_f}{I_z} \\ 0 \\ 0 \end{pmatrix} \delta_f + \begin{pmatrix} 0 \\ 0 \\ -v \\ 0 \end{pmatrix} \rho_{ref}$$

Les entrées de ce modèle sont l'angle de braquage des roues avant $\delta_f$ et la courbure de la route $\rho_{ref}$. En sortie de ce modèle, nous considérons l'état complet du modèle du véhicule x selon l'équation 4 suivante :

$$x = (\beta, r, \Psi_L, y_L)^T$$

L'équation 5 suivante contient la forme matricielle de ce modèle :
$\dot{x} = Ax + B_u \delta_f + B_\rho \rho_{ref}$, $B_u$ étant le vecteur d'influence de braquage et $B_\rho$ le vecteur de perturbation.

A noter que le modèle d'état obtenu en équation 5 est variant en temps, si on considère que la vitesse peut aussi varier à faible accélération. A titre d'exemple, le coefficient a11 de la matrice A dépend de la vitesse qui varie en temps. Une paramétrisation favorable en considérant un domaine de fonctionnement pour la vitesse va rendre ce modèle affine dans un paramètre lié à la vitesse. Grâce à cette approche, une méthode classique de synthèse des lois de commande linéaire pourra être appliquée en considérant les limites du domaine de fonctionnement du paramètre.

Ainsi, soit la vitesse du véhicule considérée variable entre les limites $v_{min} < v < v_{max}$. Une paramétrisation possible en fonction d'un paramètre $\xi_v \in [-1,1]$ est donnée par l'équation 6 suivante :

$$v = \frac{v_0 v_1{}^2}{v_1{}^2 - v_0{}^2}\left(1 - \frac{v0}{v1}\xi_v\right) \qquad v0 = \frac{2v^{\min}v^{\max}}{v^{\max} + v^{\min}} \qquad v1 = -\frac{2v^{\min}v^{\max}}{v^{\max} - v^{\min}}$$

$$\frac{1}{v} \cong \frac{1}{v_0} + \frac{1}{v_1}\xi_v \,, \quad \frac{1}{v^2} \cong \frac{1}{v_0{}^2}\left(1 + 2\frac{v_0}{v_1}\xi_v\right)$$

Si $v_{min}$ = $v_{max}$=v, cette paramétrisation n'est pas valable et $\xi_v$=0. Avec cette paramétrisation, les termes qui contiennent v, 1/v et $1/v^2$ peuvent être remplacés dans l'équation 3.

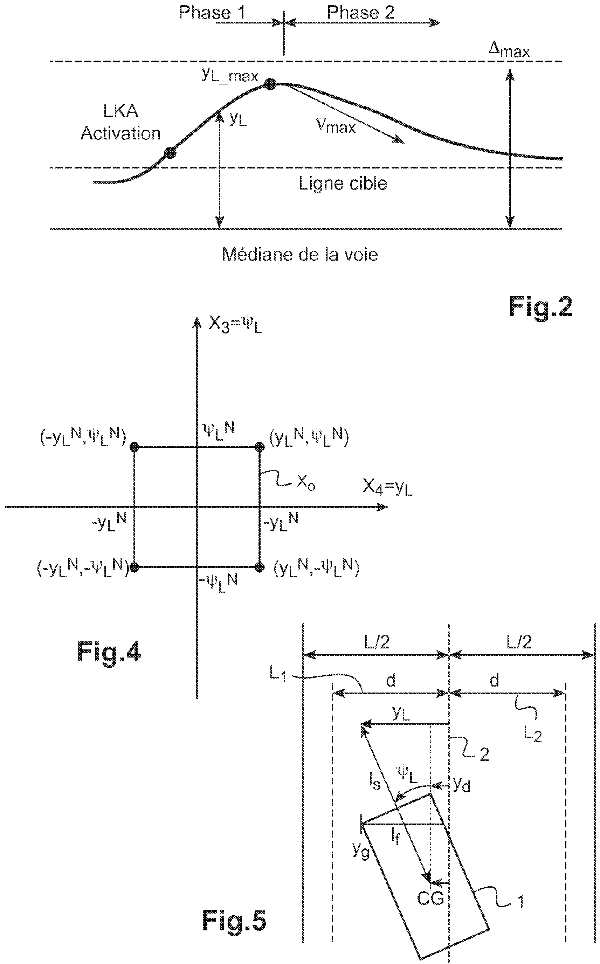

Nous allons maintenant décrire la stratégie de correction LKA en référence à la figure 2, qui illustre la trajectoire du véhicule par rapport à une ligne cible définissant un écart latéral par rapport à l'axe (médiane) de la voie déclenchant l'activation de la correction de trajectoire LKA. Ainsi, après l'activation de la correction de trajectoire LKA, la trajectoire du véhicule pendant la correction LKA peut être découpée en deux phases, respectivement une première phase référencée Phase 1 sur la figure 2, correspondant à une phase d'évitement de sortie de voie, et une deuxième phase référencée Phase 2 sur la figure 2, correspondant à une remise en trajectoire du véhicule par rapport à la ligne cible.

Dans la première phase, la correction LKA doit garantir un déplacement latéral maximal borné, par exemple $|y_L| < \Delta_{max}$. Autrement dit, l'écart latéral par rapport à l'axe de la voie en avant du véhicule $y_L$ ne doit pas dépasser une valeur $y_{L\_max}$ bornée par rapport à une valeur $\Delta_{max}$ de déplacement latéral maximal autorisé par rapport à l'axe de la voie. De même, dans la première phase de la correction, le confort doit être maintenu, par exemple par une limitation de l'angle de braquage et de la vitesse latérale maximale.

Dans la deuxième phase de correction, le véhicule doit être dirigé vers la ligne cible tout en gardant le confort. Pour cela, la vitesse latérale du véhicule devrait être bornée, par exemple $|\dot{y}_L| < \nabla_{max}$.

On prévoit donc deux lois de commande différentes de la correction de trajectoire, respectivement pour la première phase et la deuxième phase, avec un passage de la première à la deuxième lorsque la vitesse latérale diminue, c'est-à-dire à la transition entre les deux phases. Conformément aux principes de l'invention, la trajectoire dynamique du véhicule sur la voie est prise en compte a priori dans la définition de ces deux lois de commande, de façon à garantir un déplacement latéral maximal sur la voie de circulation, un angle de braquage maximal pendant la correction et une vitesse latérale maximale. Autrement dit, la vitesse latérale, l'angle de braquage et le déplacement latéral sont limités pendant la correction de trajectoire LKA implémentée par ces deux lois de commande.

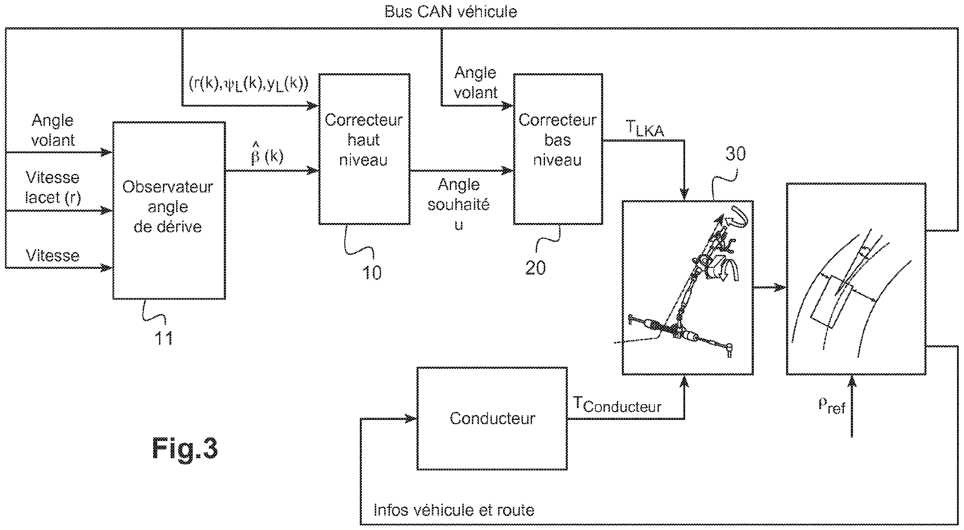

De façon classique, pour une commande en couple de la colonne de direction, la correction LKA se base sur deux correcteurs imbriqués comme illustré à la figure 3, respectivement un correcteur de haut niveau 10, qui génère une consigne u en angle de braquage souhaité en partant des mesures comme l'angle de dérive du véhicule $\hat{\beta}(k)$ (par exemple estimé par un observateur d'état 11), la vitesse de lacet r(k), l'angle de cap $\Psi_L(k)$ et l'écart latéral $y_L(k)$ du véhicule, et un correcteur de bas niveau 20, qui convertit l'angle de braquage souhaité u en une consigne en couple $T_{LKA}$, en tenant compte également de l'angle du volant. Cette consigne est ensuite transmise à la machine électrique 30 qui agit sur la colonne de direction du véhicule, éventuellement en superposant une consigne en couple $T_{conducteur}$ issue du conducteur.

La correction de trajectoire suivant les principes de l'invention est implémentée par le correcteur haut niveau 10, qui est conçu pour calculer un gain de correction résultant d'une optimisation multicritères par recherche du minimum pour chacun des critères suivants parmi un déplacement latéral maximal sur la voie de circulation, un angle de braquage maximal aux roues du véhicule et la vitesse latérale maximale du véhicule, pendant la correction de trajectoire. Pour ce faire et comme il sera décrit plus en détail par la suite, le principe de l'optimisation quadratique convexe sous contraintes de type LMI (acronyme anglais pour « Linear Matrix Inequalities ») va être utilisé.

Quant au correcteur bas niveau 20, un correcteur classique de type PID par exemple, peut être mis en oeuvre. Ce correcteur ne sera pas détaillé plus avant car il n'est pas concerné par la présente invention.

S'agissant de la description du correcteur haut niveau 10, considérons d'abord le système véhicule dans sa voie de circulation décrit précédemment :

$$\dot{x} = A(\xi_v)x + B(\xi_v)sat(u) + B_w w$$
$$y = Cx \qquad\qquad \text{équation 7}$$

ou u représente l'entrée du système, c'est à dire l'angle de braquage $\delta_f$, w représente l'entrée de perturbation, c'est à dire $\rho_{ref}$, sat(*) est la fonction de saturation de la donnée ou paramètre *, et y est la sortie du système. Cette sortie peut être assimilée à l'état x entier, c'est-à-dire $x=(\beta, r, \Psi_L, y_L)^T$.

Le type de correcteur choisi est un retour d'état statique, comme décrit par l'équation suivante :

$$u = Kx \qquad \text{équation 8}$$

De plus, pour ce correcteur, une saturation est considérée, car l'angle de braquage maximal permis pour la correction LKA est borné. On définit pour la suite :

$$\psi(Kx) = Kx - sat(Kx) \qquad \text{équation 9}$$

Alors, la boucle de correction haut niveau LKA peut être écrite de la manière suivante :

$$\dot{x} = \left( A(\xi_v) + B(\xi_v)K \right)x - B(\xi_v)\psi(Kx) + B_w w \qquad \text{équation 10}$$

On fait par la suite des hypothèses de conception, qui représentent des contraintes sur l'entrée et les états du système véhicule.

Ainsi, selon une première hypothèse, l'entrée du système constituée par l'angle de braquage est bornée, soit :

$$|u| < \overline{u} \qquad \text{équation 11}$$

Selon une deuxième hypothèse, l'entrée de perturbation, c'est à dire la courbure de la route, est bornée en deçà de la valeur maximale $\delta^2$, soit :

$$\forall t > 0, w(t) \in \Omega \ \text{ avec}$$

$$\Omega = \left\{ w \in R : w^T w < \delta^2 \right\} \qquad \text{équation 12}$$

Selon une troisième hypothèse, le paramètre variable dépendant de la vitesse est également borné, soit :

$$\xi_v = \xi_v(t) :$$
$$\Theta = \left\{ \xi_v : -1 \leq \xi_v \leq 1 \right\} \qquad \text{équation 13}$$

Pour résumer, on cherche le gain de retour d'état statique K, ou gain de correction, pour le système décrit dans l'équation 7, selon les première, deuxième et troisième hypothèses énoncées ci-dessus, tel que :

1. En absence de perturbation, ou si les perturbations s'atténuent progressivement, le correcteur 10 garantit la convergence vers la ligne cible pour des états initiaux dans un ensemble initial ;
2. En présence des perturbations, le correcteur 10 garantit que la trajectoire du véhicule est bornée par rapport à la ligne cible ;
3. Le correcteur 10 garantit le respect des contraintes sur l'entrée et les états du véhicule ;
4. Le correcteur 10 garantit une dynamique de convergence par un placement favorable des pôles en boucle fermée dans une région [-$\alpha$2, -$\alpha$1] sur l'axe réel de l'espace (Réel, Imaginaire) de représentation des pôles.

Pour trouver ce gain K, on va chercher, par un problème d'optimisation convexe, simultanément le gain K et une fonction quadratique $V(t) = x^T P x, P = P^T > 0$, qui assure par ses courbes de niveau ellipsoïdales des ensembles invariants.

$$\varepsilon = \left\{ x \in R^4 : x^T P x < 1 \right\} \qquad \text{équation 14}$$

Autrement dit, si la trajectoire du système véhicule entre dans une courbe de niveau ellipsoïdale, elle ne va plus quitter cette courbe malgré la perturbation bornée. De cette façon, les bornes demandées précédemment peuvent être assurées. En absence de perturbation, la trajectoire va de plus converger vers l'origine de la fonction quadratique. Pour avoir un tel comportement, la dérivée de cette fonction par rapport au temps doit être négative (fonction décroissante) en absence de perturbation. L'expression mathématique des équations qui ont comme inconnus d'un côté le gain de retour d'état K et de l'autre côté la matrice P qui définit cette fonction quadratique, sera donnée par la suite.

La correction LKA n'a pas pour but de suivre en permanence la médiane de la voie de circulation, mais de corriger des déviations involontaires de la trajectoire du véhicule. En conséquence, les conditions d'activation initiales du déclenchement de l'activation de la correction de trajectoire peuvent être éloignées de l'axe de la voie ou de la ligne cible en ce qui concerne la position du véhicule (angle de cap relatif et écart latéral) et la dynamique de celui-ci (vitesse de lacet et angle de dérive du vecteur vitesse).

Comme montré à la figure 4, on suppose que l'ensemble des conditions initiales est contenu dans le polytope nommé $X_0$ dont les coins sont notés par $X_{0i}$ avec i = 1, ..., $2^4$. La condition que ces coins appartiennent à la courbe de niveau égale à 1 de la fonction quadratique V s'écrit comme une inégalité matricielle de la façon suivante :

$$\begin{bmatrix} 1 & X_{0i} \\ X_{0i}^T & Q \end{bmatrix} \geq 0, i = 1,...,2^4 \qquad \text{équation 15}$$

Suivant la contrainte de l'équation 15, toute trajectoire commencée dans le polytope $X_0$ ne va pas dépasser l'ensemble $\varepsilon$. La matrice Q est la matrice inverse de la matrice P. Ainsi, on estime qu'au moment du déclenchement de l'activation de la fonction de correction de la trajectoire, l'état du véhicule se trouve dans une région de « conduite normale » incluse dans l'ensemble de points initiaux borné $\varepsilon$, définissant la zone d'activation de la correction de trajectoire.

De même, comme précédemment, s'agissant des contraintes sur les états du système pendant la correction de trajectoire, si l'ensemble invariant $\varepsilon$ est contenu dans un polyèdre $X_1$, alors une trajectoire qui commence à l'intérieur de $\varepsilon$ ne va pas quitter non plus $X_1$. De cette façon, on assure que les états du système véhicule restent bornés pendant la correction de trajectoire LKA. De manière générale, l'ensemble $X_1$ est défini comme suit :

$$X_1 = \left\{ x \in R^4 : |H_{1i}x| \leq h_{01i}, i = 1,...,s_{c1} \right\} \qquad \text{équation 16}$$

Autrement dit, partant des conditions initiales d'activation de la fonction de correction de la trajectoire, l'état du véhicule reste contenu dans un ensemble de points borné dans un repère défini par l'angle de cap relatif et l'écart latéral.

Dans un cas particulier, on peut lier cet ensemble à la position des roues avant du véhicule sur la voie de circulation, et donc limiter le déplacement des roues avant du véhicule sur la voie pendant la correction de trajectoire LKA, comme illustré à la figure 5. Si $y_g$ et $y_d$ sont les positions des roues avant du véhicule, alors ces positions sont liées aux états du système véhicule par les équations :

$$y_g = y_L + (l_f - l_s)\psi_L + \frac{a}{2} \text{ et } y_d = y_L + (l_f - l_s)\psi_L - \frac{a}{2} \qquad \text{équation 17}$$

Pendant la correction, la position des roues avant du véhicule 1 est contrainte dans des bandes latérales L1, L2 situées de part et d'autre d'une ligne cible 2 sur la voie, correspondant à la médiane de la voie, et s'étendant sur une distance d par rapport à la ligne cible si la condition suivante est satisfaite :

$$-d + \frac{a}{2} \leq y_L + (l_f - l_s)\psi_L \leq d - \frac{a}{2} \qquad \text{équation 18}$$

Ainsi, en incluant l'ellipsoïde $\varepsilon$ dans le polyèdre décrit par l'équation 18, on garantit que les roues avant du véhicule restent contenues dans les bandes latérales L1, L2 pendant la correction de trajectoire.

Dans un autre cas particulier, pour le confort de la correction, l'angle de braquage du véhicule peut être borné. Si la saturation sur l'angle de braquage n'est pas prise en compte, alors la condition de borner l'angle de braquage est $|Kx| < \bar{u}$. Le vecteur H1 de l'Equation 16 devient alors K *et* $h_{01} = \bar{u}$. En incluant alors l'ellipsoïde $\varepsilon$ dans le polyèdre décrit dans l'équation 16 avec les notations précédentes, on garantit que l'angle de braquage du véhicule ne va pas dépasser $\bar{u}$ pendant la correction.

De manière générale, l'inclusion de l'ellipsoïde $\varepsilon$ dans le polyèdre $X_1$ s'écrit comme une équation LMI de la façon suivante :

$$\begin{bmatrix} Q & QH_{1i}^{T} \\ H_{1i}Q & h_{01i}^{2} \end{bmatrix} \geq 0, i = 1,...,s_{c1} \qquad \text{équation 19}$$

Comme précédemment, les états du système sont bornés, les dérivées de ces états peuvent être bornées également en incluant l'ensemble invariant $\varepsilon$ dans un polyèdre $X_2$. Comme on part de dérivées du système véhicule $\dot{x}$, dans ce cas, le polyèdre $X_2$ contient dans sa définition les matrices du système $A(\xi_v)$ et $B(\xi_v)$ :

$$X2 = \left\{ x \in R^4 : |H_{2i}(A(\xi_v) + B(\xi_v)K)x| \leq h_{02i}, i = 1 : s_{c2} \right\} \qquad \text{équation 20}$$

Un exemple particulier, résultant d'une condition nécessaire au confort pendant la correction LKA, concerne la vitesse latérale du véhicule. On souhaite préférentiellement borner cette vitesse. Pour ce cas de figure, la matrice $H_{2i=1}$ de l'équation 20 a la forme :

$$H_{2i=1} = \begin{bmatrix} 0,0,0,1 \end{bmatrix} \qquad \text{équation 21}$$

Pour sélectionner le dernier état $\dot{y}_L$ du vecteur $\dot{x}$, on considère le vecteur $[0,0,0,1] \dot{x} = \dot{y}_L$. Avec ce vecteur, on obtient donc $[0,0,0,1] (A(\xi_v) + B(\xi_v)K)x = \dot{y}_L$.

La limite $h_{02i}$ de l'Equation 18 est donnée par la limite exigée sur la vitesse latérale du véhicule $\nabla_{max}$.

En incluant alors l'ellipsoïde $\varepsilon$ dans le polyèdre décrit dans l'équation 20, on garantit que la vitesse latérale maximale du véhicule ne va pas dépasser $\nabla_{max}$ pendant la correction. De manière générale, l'inclusion s'écrit comme une équation LMI de la façon suivante :

$$\begin{bmatrix} Q & (QA(\xi_v)^{T} + R^{T}B(\xi_v)^{T})H_{1i}^{T} \\ H_{2i}(A(\xi_v)Q + B(\xi_v)R) & h_{02i}^{2} \end{bmatrix} \geq 0, i = 1,...,s_{c2}$$

équation 22

Dans l'équation 22, la matrice R est définie par $R = KP^{-1}$

Comme décrit précédemment, l'angle de braquage pendant la correction LKA est saturé. Pour respecter cette saturation, on peut demander d'une manière conservative que la consigne de commande soit toujours inférieure à une valeur maximale de saturation de l'angle de braquage, soit :

$$\begin{bmatrix} Q & R^{T} \\ R & \bar{u}^{2} \end{bmatrix} \geq 0 \qquad \text{équation 23}$$

Cependant cette condition précédente est très restrictive car l'entrée de commande peut dépasser la valeur maximale $\bar{u}$, être alors saturé à $\bar{u}$, et assurer une correction stable de la trajectoire. Pour cette raison, on cherche à élargir cette condition en déterminant une région maximale de stabilité au delà de l'ensemble $|Kx| < \bar{u}$, qui est conservatif. Ceci revient à considérer un vecteur supplémentaire G tel que $|(K - G)x| < \bar{u}$. Cette condition sera prise en compte dans le calcul du correcteur LKA 10, à travers un lemme énoncé comme suit :
Soit l'ensemble polyédral défini par :

$$S = \left\{ x \in R^n, |(K - G)x| \leq \bar{u} \right\}$$

*Si x(t)* $\in$ *S,* alors l'inégalité suivante est satisfaite pour toute matrice T diagonale et définie positive, $T \in R^{nXn}$

$$\psi(Kx)^{T} T(\psi(Kx) - Gx) \leq 0$$

Pour plus de détail sur l'énoncé du lemme définissant les conditions de saturation de l'angle de braquage prises en compte dans la correction LKA, le lecteur pourra avantageusement se reporter à la publication suivante : J. M. Gomes da Silva Jr. and S. Tarbouriech, "Anti-windup design with guaranteed régions of stability: An LMI-based approach," IEEE Transaction on Automatic Control, vol. 50, no. 1, pp. 106-111, 2005.

Par ailleurs, on souhaite influencer la dynamique de la réponse transitoire en boucle fermée du système véhicule. Pour cela, les pôles de la boucle fermée mettant en oeuvre la correction doivent être placés dans une région de l'espace (Imaginaire, Réel) délimitée par$[-\alpha_2, -\alpha_1]$. Cette condition s'écrit comme une inégalité LMI de la manière suivante :

$$QA(\xi_v)^T + R^T B(\xi_v)^T + A(\xi_v)Q + B(\xi_v)R + 2\alpha_1 W \prec 0$$
$$QA(\xi_v)^T + R^T B(\xi_v)^T + A(\xi_v)Q + B(\xi_v)R + 2\alpha_2 W \succ 0$$

équation 24

La matrice W est une matrice symétrique et définie positive.

Pour de plus amples détails sur cette condition sur le placement des pôles, le lecteur pourra avantageusement se reporter à la publication suivante : M. Chilali et P. Gahinet, "Hinf Design with Pole Placement Constraints: An LMI Approach", IEEE Transactions on Automatic Control, Vol. 41, No. 3, 1996, pp. 358-367.

Une autre contrainte à prendre en compte est la stabilité et la robustesse vis-à-vis des perturbations. Ainsi, la correction LKA doit être stable et robuste vis-à-vis des perturbations, notamment de la courbure de la voie. Ainsi, si l'ensemble $\varepsilon$ est invariant malgré des perturbations bornées, c'est-à-dire que chaque trajectoire commençant dans cet ensemble y est contenue, alors la demande de stabilité et robustesse est satisfaite.

D'une manière formelle, l'ensemble $\varepsilon \subset R^n$ est invariant malgré la perturbation w pour le système décrit dans l'équation 7 si $\forall x(0) \in \varepsilon, w(t) \in \Omega$ et pour tous paramètres $\xi_v(t)$, alors la trajectoire du système véhicule est contenue dans $\varepsilon$, c'est-à-dire $\forall x(t) \in \varepsilon, \forall t > 0$. Comme expliqué plus haut, selon un premier cas de réalisation, on souhaite aussi que l'angle de braquage ne dépasse pas une valeur maximale et, selon un deuxième cas de réalisation, on souhaite que la correction reste stable et robuste malgré la saturation de l'angle de braquage.

Pour le premier cas de réalisation, pour assurer l'invariance il suffit de satisfaire la condition suivante :

$$\dot{V}(t) < 0, \begin{cases} \forall x(t) : x^T P x > 1 \\ \forall w(t) : w^T w < \delta^2 \end{cases}$$

équation 25

Pour les trajectoires du système décrit dans l'équation 7, en utilisant la méthode appelée S-Procedure dans la littérature spécialisée, cette condition est satisfaite s'il existe deux scalaires $\beta_1 > 0$ et $\beta_2 > 0$, tels que :

$$\dot{V} + \beta_1(x^T P x - 1) + \beta_2(\delta^2 - w^T w) < 0$$

équation 26

Cette inégalité de l'équation 26 s'écrit comme une équation LMI de la manière suivante :

$$\begin{bmatrix} QA(\xi_v)^T + R^T B(\xi_v)^T + A(\xi_v)Q + B(\xi_v)R + \beta_1 Q & B_w & 0 \\ B_w^T & -\beta_2 I & 0 \\ 0 & 0 & \beta_2 \delta^2 - \beta_1 \end{bmatrix} \prec 0$$

équation 27

avec :

1. $Q = P^{-1}$
2. $R = KP^{-1}$

Pour inclure l'ensemble invariant $\varepsilon$ dans l'ensemble qui satisfait la condition maximale sur l'angle de braquage, l'équation 23 doit être simultanément satisfaite.

Pour le deuxième cas d'utilisation, le système décrit dans l'équation 7 a comme ensemble invariant $\varepsilon$ si la

condition suivante est satisfaite :

$$\dot{V}(t) < 0, \begin{cases} \forall x(t): x^T P x > 1 \\ \forall w(t): w^T w < \delta^2 \\ \forall x: |(K-G)x| \leq \overline{u} \end{cases} \qquad \text{équation 28}$$

La condition $\forall x: |(K - G)x| \leq \overline{u}$ signifie que la saturation de l'angle de braquage est permise et en cherchant G, on cherche l'angle maximal avant saturation qui peut être accepté par le système saturé en restant stable. Cette condition s'écrit comme une équation LMI de la manière suivante :

$$\begin{bmatrix} P & * \\ K-G & \overline{u}_i^2 \end{bmatrix} \geq 0 \qquad \text{équation 29}$$

L'étoile dans l'équation 29 signifie les matrices opposées transposées.

En utilisant le Lemme énoncé précédemment, l'équation 28 est équivalente à :

$$\dot{V}(t) < 0, \begin{cases} \forall x(t): x^T P x > 1 \\ \forall w(t): w^T w < \delta^2 \\ \forall x: \psi(Kx)^T T(\psi(Kx) - Gx) \leq 0 \end{cases} \qquad \text{équation 30}$$

Pour les trajectoires du système décrit dans l'équation 7, en utilisant la méthode appelée S-Procedure dans la littérature spécialisée, cette condition est satisfaite s'il existe deux scalaires $\beta_1 > 0$ et $\beta_2 > 0$, et T une matrice diagonale définie positive, tels que :

$$\dot{V} + \beta_1 x^T P x - \beta_2 w^T w - 2(\psi(Kx) - Gx) < 0$$
$$\beta_2 \delta^2 - \beta_1 < 0 \qquad \text{équation 31}$$

En remplaçant la dérivée de la fonction V avec son résultat et par des manipulations mathématiques, on obtient l'inégalité matricielle suivante :

$$\begin{bmatrix} (A(\xi_v)^T + R^T B(\xi_v)^T + A(\xi_v)Q + B(\xi_v)R + \beta_1 Q & B_w & Z - B(\xi_v)S \\ B_w^T & -\beta_2 I & 0 \\ Z^T - SB(\zeta v)^T & 0 & -2S \end{bmatrix} \prec 0$$

équation 33

avec :

1. $Q = P^{-1}$
2. $R = KP^{-1}$
3. $Z = P^{-1}G^T$
4. $S = T^{-1}$

Pour inclure l'ensemble invariant $\varepsilon$ dans l'ensemble qui satisfait la condition maximale sur l'angle de braquage, l'équation 29 doit être simultanément satisfaite avec l'équation 33.

En conclusion, pour calculer le gain de retour d'état statique K ensemble avec la fonction quadratique $V(t) = x^T P x, P = P^T > 0$, une solution faisable pour toutes les inégalités LMI décrites précédemment doit être trouvée. De plus, on peut rechercher les inconnus K et P, tels qu'un critère de performance convexe soit minimisé. Le critère de performance choisi est multi-objective. Il minimise à la fois :

1. Le déplacement latéral du véhicule
2. L'angle maximal de braquage et
3. La vitesse latérale du véhicule

Selon un premier mode de réalisation, dans lequel on souhaite que l'angle de braquage soit borné à $\bar{u}$ par conception et que la saturation joue alors uniquement un rôle de sécurité, le problème suivant d'optimisation convexe sous contraintes LMI doit être résolu :

$$\text{Min} \quad Poids_1 * fQf^T + Poids_2 * \bar{u}^2 + Poids_3 * (\nabla_{max})^2$$

Ce problème de minimisation de la fonction quadratique V doit vérifier un nombre fini de contraintes, comme exposées précédemment, qui se traduisent comme suit :

$$\begin{bmatrix} 1 & X_{0i} \\ X_{0i}^T & Q \end{bmatrix} \geq 0, i = 1, ..., 2^4,$$

concernant la contrainte de l'inclusion de la zone initiale d'activation de la fonction de correction de trajectoire dans l'ensemble des conditions initiales $\varepsilon$ contenu dans le polytope $X_0$;

$$\begin{bmatrix} Q & Qf^T \\ fQ & d^2 \end{bmatrix} \geq 0,$$

concernant la contrainte d'un déplacement latéral maximal sur la voie de circulation inférieur à d ($f = \llcorner 0, 0, 2(l_f - l_s), 2 \lrcorner$) ;

$$\begin{bmatrix} Q & R^T \\ R & \bar{u}^2 \end{bmatrix} \geq 0,$$

concernant la contrainte de minimisation de l'angle de braquage maximal ;

$$\begin{bmatrix} Q & (QA(\xi_v)^T + R^T B(\xi_v)^T)H^T \\ H(A(\xi_v)Q + B(\xi_v)R) & \nabla_{max}^2 \end{bmatrix} \geq 0, H = \begin{bmatrix} 0, 0, 0, 1 \end{bmatrix},$$

concernant la contrainte de minimisation de la vitesse latérale maximale du véhicule.

Par ailleurs, comme exposé précédemment, on a les contraintes suivantes sur le placement des pôles en boucle fermée dans une certaine zone du plan (Réel, Imaginaire) :

$$QA(\xi_v)^T + R^T B(\xi_v)^T + A(\xi_v)Q + B(\xi_v)R + 2\alpha_1 W \prec 0$$

$$QA(\xi_v)^T + R^T B(\xi_v)^T + A(\xi_v)Q + B(\xi_v)R + 2\alpha_2 W \succ 0$$

et sur la stabilité et la robustesse de la correction LKA :

$$\begin{bmatrix} QA(\xi_v)^T + R^T B(\xi_v)^T + A(\xi_v)Q + B(\xi_v)R + \beta_1 Q & B_w & 0 \\ B_w^T & -\beta_2 I & 0 \\ 0 & 0 & \beta_2 \delta^2 - \beta_1 \end{bmatrix} \prec 0$$

Les inconnus de ce problème d'optimisation sont :

1. $Q = P^{-1}$
2. $R = KP^{-1}$
3. $\bar{u}^2$
4. $(\nabla_{max})^2$
5. $\beta_1 > 0$

6. $\beta_2 > 0$

Si $\overline{u}^2$ obtenu ne correspond pas à la limite souhaitée, le problème d'optimisation doit être refait avec un poids Poids2 plus important sur ce critère pour assurer un angle de braquage maximal en deçà de la saturation.

Selon un deuxième mode de réalisation, on accepte que l'angle de braquage entre en saturation pendant la correction et on souhaite que la correction reste stable et robuste malgré cette saturation. Autrement dit, contrairement au premier mode de réalisation exposé ci-dessus, l'angle de braquage peut atteindre la valeur maximale et on prend en compte la saturation pour conserver la stabilité et la robustesse de la correction de trajectoire. Pour ce faire, suivant ce deuxième mode de réalisation, à l'aide du Lemme énoncé plus haut, la contrainte sur la stabilité et la robustesse est remplacée en tenant compte de la saturation et on obtient le problème d'optimisation suivant :

$$\text{Min} \qquad \text{Poids}_1 * fQf^T + \text{Poids}_2 * \overline{u}^2 + \text{Poids}_3 * (\nabla_{max})^2$$

Ce problème de minimisation suivant le deuxième mode de réalisation doit alors vérifier les contraintes suivantes :

$$\begin{bmatrix} 1 & X_{0i} \\ X_{0i}^T & Q \end{bmatrix} \geq 0, i = 1,...,2^4 ,$$

concernant la contrainte de l'inclusion de la zone initiale d'activation de la fonction de correction de trajectoire dans l'ensemble des conditions initiales $\varepsilon$ contenu dans le polytope $X_0$;

$$\begin{bmatrix} Q & Qf^T \\ fQ & d^2 \end{bmatrix} \geq 0 ,$$

concernant la contrainte d'un déplacement latéral maximal sur la voie de circulation inférieur à d ($f = \lfloor 0,0,2(l_f - l_s),2 \rfloor$) ;

$$\begin{bmatrix} Q & (QA(\xi_v)^T + R^T B(\xi_v)^T)H^T \\ H(A(\xi_v)Q + B(\xi_v)R) & \nabla_{max}^2 \end{bmatrix} \geq 0, H = \begin{bmatrix} 0,0,0,1 \end{bmatrix},$$

concernant la contrainte de minimisation de la vitesse latérale maximale du véhicule.

Par ailleurs, comme pour le premier mode de réalisation, on a les contraintes suivantes sur le placement des pôles en boucle fermée dans une certaine zone du plan (Réel, Imaginaire) :

$$QA(\xi_v)^T + R^T B(\xi_v)^T + A(\xi_v)Q + B(\xi_v)R + 2\alpha_1 W \prec 0$$

$$QA(\xi_v)^T + R^T B(\xi_v)^T + A(\xi_v)Q + B(\xi_v)R + 2\alpha_2 W \succ 0$$

et sur la stabilité et la robustesse de la correction LKA :

$$\begin{bmatrix} QA(\xi_v)^T + R^T B(\xi_v)^T + A(\xi_v)Q + B(\xi_v)R + \beta_1 Q & B_w & Z - B(\xi_v)S \\ B_w^T & -\beta_2 I & 0 \\ Z^T - SB(\xi_v)^T & 0 & -2S \end{bmatrix} \prec 0$$

Enfin, ce problème de minimisation comprend en outre la contrainte suivante sur l'angle de braquage saturé pendant la correction :

$$\beta_2 \delta^2 - \beta_1 < 0$$

$$\begin{bmatrix} Q & R^T - Z \\ * & \overline{u}^2 \end{bmatrix} \geq 0 \qquad ,$$

qui définit la condition d'inclusion de l'ensemble $\varepsilon$ dans la région de validité de saturation.

Les inconnus de ce problème d'optimisation selon le deuxième mode de réalisation sont :

1. $Q=P^{-1}$
2. $R=KP^{-1}$
3. $Z=P^{-1}G^{T}$
4. $S=T^{-1}$
5. $\bar{u}^{2}$
6. $(\nabla_{max})^{2}$
7. $\beta_{1} > 0$
8. $\beta_{2} > 0$

Ainsi, pendant la correction de trajectoire suivant ce deuxième mode de réalisation, l'angle de braquage peut être saturé et cependant la stabilité de la correction est maintenue.

Pour avoir une solution valable sur toute la plage de vitesse [vmin, vmax], les problèmes d'optimisation précédents suivant les premier et deuxième modes de réalisation doivent être résolus en même temps pour $\xi_{v}$=-1 et pour $\xi_{v}$=1. Ces problèmes d'optimisation convexes sous contrainte LMI peuvent être calculés hors ligne, par exemple à l'aide de logiciels tels que Matlab et Robust Control Toolbox. Par exemple, les fonctions suivantes de Matlab peuvent être utilisées : lmiterm, lmivar, mincx. Ensuite, le vecteur K sera mémorisé dans la mémoire non-volatile de l'unité de contrôle électronique (ECU) qui héberge la fonction de correction de trajectoire LKA et sera utilisé en ligne. Ainsi, le problème d'optimisation pour obtenir la loi de commande de la correction de trajectoire se fait hors ligne et le résultat du calcul fourni par le gain de retour d'état statique K est utilisé en ligne sur le véhicule.

Comme indiqué en référence à la figure 2, la stratégie de correction LKA peut être découpée en deux phases, respectivement une première phase référencée Phase 1, qui intervient avant que le véhicule ait atteint le point d'écart latéral maximal $y_{L\_}$max, où la correction doit être relativement dynamique pour éviter la sortie de voie du véhicule, et une deuxième phase référencée Phase 2, qui intervient après le point d'écart latéral maximal $y_{L\_}$max, où la correction doit être relativement plus souple pour remettre le véhicule en trajectoire vers la ligne cible.

Pour répondre à ces conditions différentes pour ces deux phases de correction, une calibration du gain de correction en fonction de ces deux phases peut être mise en oeuvre. Une première manière d'effectuer cette calibration consiste à calculer un seul gain de retour d'état statique K pour les deux phases, puis de le pondérer par un facteur $\alpha$, par exemple pour la deuxième phase. Autrement dit, on applique un gain $K_{1}$=K pour la première phase de correction et un gain pondéré $K_{2}$=$\alpha$K, où $\alpha \in [\alpha_{min};\alpha_{max}]$. La condition pour garder la stabilité du système à la transition entre les deux phases est d'avoir une même fonction quadratique $V(x)=x^{T}Px$ aux limites de l'intervalle $[\alpha_{min} ; \alpha_{max}]$ telle que :

$$(A+\alpha_{min}BK)^{T}P+P(A+\alpha_{min}BK)<0$$

$$(A+\alpha_{max}BK)^{T}P+P(A+\alpha_{max}BK)<0$$

Cette fonction quadratique peut être calculée a posteriori, quand le gain de retour d'état statique K a été déjà calculé. De plus, pour avoir une stabilité garantie également pour tout l'intervalle de vitesse [vmin, vmax], les inégalités précédentes doivent être satisfaites en même temps pour $\xi_{v}$=-1 et pour $\xi_{v}$=1. Donc, pour assurer la stabilité pour toute variation de la vitesse dans l'intervalle donné, quatre inégalités doivent être satisfaites.

Une deuxième manière de faire pour répondre aux conditions différentes pour les deux phases de correction est de calculer deux gains de retours d'état statique différents pour chaque phase, respectivement un premier gain $K_{1}$, pour la première phase, et un deuxième gain $K_{2}$ pour la deuxième phase. Comme précédemment, la condition pour garder la stabilité du système à la transition entre les deux phases est à nouveau d'avoir une même fonction quadratique $V(x)=x^{T}Px$ telle que :

$$(A+BK_{1})^{T}P+P(A+BK_{1})<0$$

$$(A+BK_{2})^{T}P+P(A+BK_{2})<0$$

Cette fonction quadratique $V(x)=x^{T}Px$ peut être calculée a posteriori, quand les gains de retours d'état statique K1 et K2 ont été déjà calculés. De plus, pour avoir une stabilité garantie également pour tout l'intervalle de vitesse [vmin, vmax], les inégalités précédentes doivent être satisfaites en même temps pour $\xi_{v}$=-1 et pour $\xi_{v}$=1. Donc, pour assurer la stabilité pour toute variation de la vitesse dans l'intervalle donné, quatre inégalités doivent être également satisfaites.

On a donc soit l'utilisation du même gain de correction pour les deux phases de correction, avec un facteur de pondération appliqué au gain de correction pour l'une des deux phases, en l'occurrence la deuxième phase, soit l'utilisation de deux gains différents calculés respectivement pour la première et la deuxième phase de correction.

A noter que la loi de commande selon la présente invention peut être appliquée sur les véhicules équipés d'une colonne de direction pilotable en couple ou en angle.

**Revendications**

1. Procédé de correction de trajectoire d'un véhicule automobile se déplaçant sur une voie de circulation, destiné au maintien du véhicule dans la voie, ledit procédé comprenant une étape de mesure de l'écart latéral du véhicule ($Y_L$) par rapport à un marquage sur la voie de circulation et une étape de mesure de l'angle de cap relatif ($\Psi_L$) correspondant à l'angle entre l'axe longitudinal du véhicule et une ligne de la voie de circulation, à partir d'au moins une caméra équipant le véhicule, et une étape de calcul (10) d'au moins un gain de correction (K) en fonction d'au moins l'écart latéral ($Y_L$) et de l'angle de cap relatif ($\Psi_L$) mesurés, et à partir duquel une consigne de commande (u) à appliquer sur un actionneur agissant sur l'angle de braquage ($\delta_f$) des roues avant directrices du véhicule est générée, le procédé étant **caractérisé en ce que** l'étape de calcul du gain de correction (K) comprend une étape d'optimisation multicritères par recherche du minimum pour chacun des critères suivants parmi un déplacement latéral sur la voie de circulation, un angle de braquage aux roues du véhicule et la vitesse latérale du véhicule, pendant la correction de trajectoire.

2. Procédé selon la revendication 1, **caractérisé en ce que** au cours de l'étape de calcul, l'angle de braquage est minimisé sous la contrainte d'un angle de braquage maximal inférieur à une valeur maximale de saturation de l'angle de braquage.

3. Procédé selon la revendication 1, **caractérisé en ce que** au cours de l'étape de calcul, l'optimisation multicritères est effectuée avec un angle de braquage saturé à une valeur maximale de saturation de l'angle de braquage sous la contrainte d'une correction stable et robuste de la trajectoire.

4. Procédé selon l'une quelconque des revendications précédentes, **caractérisé en ce que** au cours de l'étape de calcul, le déplacement latéral est minimisé sous la contrainte d'un déplacement latéral maximal borné ($\Delta_{max}$) pendant la correction.

5. Procédé selon l'une quelconque des revendications précédentes, **caractérisé en ce que** au cours de l'étape de calcul, la vitesse latérale est minimisée sous la contrainte d'une vitesse latérale maximale bornée ($\nabla_{max}$) pendant la correction.

6. Procédé selon l'une quelconque des revendications précédentes, **caractérisé en ce qu'**il comprend une étape de calibration du gain de correction (K) en fonction d'au moins deux phases distinctes (Phase 1, Phase 2) de correction de la trajectoire.

7. Procédé selon la revendication 6, **caractérisé en ce qu'**il comprend l'utilisation du même gain de correction (K) pour les deux phases de correction de la trajectoire et l'étape de pondérer le gain de correction (K) avec un facteur de pondération pour l'une des deux phases de correction de la trajectoire.

8. Procédé selon la revendication 6, **caractérisé en ce qu'**il comprend l'étape de calculer un gain de correction (K) différent pour chacune des deux phases de correction de la trajectoire.

9. Dispositif de correction de la trajectoire d'un véhicule automobile (1) se déplaçant sur une voie de circulation comprenant un système de direction actif agissant sur l'angle de braquage des roues avant directrices du véhicule, une caméra équipant le véhicule, associée à des moyens de traitement d'image pour fournir au moins une mesure de l'écart latéral ($Y_L$) du véhicule par rapport à un marquage sur la voie de circulation et une mesure de l'angle de cap relatif ($\Psi_L$) correspondant à l'angle entre l'axe longitudinal du véhicule et une ligne de la voie de circulation, une unité de contrôle pilotant le système de direction actif pour corriger la trajectoire en fonction d'un gain de correction (K) calculé en fonction d'au moins l'écart latéral ($Y_L$) et de l'angle de cap relatif ($\Psi L$) mesurés, et à partir duquel une consigne de commande (u) à appliquer sur le système de direction actif est générée, **caractérisé en ce qu'**il comprend des moyens de calcul (10) du gain de correction (K) aptes à effectuer une optimisation multicritères par recherche du minimum pour chacun des critères suivants parmi un déplacement latéral sur la voie de circulation, un angle de braquage ($\delta f$) aux roues du véhicule et la vitesse latérale du véhicule, pendant la correction de trajectoire.

10. Véhicule automobile comprenant un dispositif selon la revendication 9.

**Patentansprüche**

1. Verfahren zur Spurkorrektur eines sich auf einem Fahrstreifen bewegenden Kraftfahrzeugs, das zum Halten des Fahrzeugs auf dem Streifen bestimmt ist, wobei das Verfahren einen Schritt des Messens des seitlichen Abstands des Fahrzeugs ($Y_L$) bezüglich einer Markierung auf dem Fahrstreifen und einen Schritt des Messens des relativen Kurswinkels ($\Psi_L$) entsprechend dem Winkel zwischen der Längsachse des Fahrzeugs und einer Linie des Fahrstreifens, ausgehend von mindestens einer das Fahrzeug bestückenden Kamera, und einen Schritt des Berechnens (10) mindestens einer Korrekturverstärkung (K) abhängig mindestens vom gemessenen seitlichen Abstand ($Y_L$) und vom gemessenen relativen Kurswinkel ($\Psi_L$) enthält, und ausgehend von dem ein auf einen auf den Einschlagwinkel ($\sigma_f$) der gelenkten Vorderräder des Fahrzeugs einwirkenden Aktor anzuwendender Steuersollwert (u) generiert wird,
wobei das Verfahren **dadurch gekennzeichnet ist, dass** der Schritt der Berechnung der Korrekturverstärkung (K) einen Schritt der Mehrkriterien-Optimierung durch Suche des Minimums für jedes der folgenden Kriterien unter einer seitlichen Verschiebung auf dem Fahrstreifen, einem Einschlagwinkel an den Rädern des Fahrzeugs und der seitlichen Geschwindigkeit des Fahrzeugs während der Spurkorrektur enthält.

2. Verfahren nach Anspruch 1, **dadurch gekennzeichnet, dass** während des Rechenschritts der Einschlagwinkel unter der Vorgabe eines maximalen Einschlagwinkels geringer als ein maximaler Sättigungswert des Einschlagwinkels minimiert wird.

3. Verfahren nach Anspruch 1, **dadurch gekennzeichnet, dass** während des Rechenschritts die Mehrkriterien-Optimierung mit einem auf einen maximalen Sättigungswert des Einschlagwinkels unter der Vorgabe einer stabilen und robusten Korrektur der Spur gesättigten Einschlagwinkel ausgeführt wird.

4. Verfahren nach einem der vorhergehenden Ansprüche, **dadurch gekennzeichnet, dass** während des Rechenschritts die seitliche Verschiebung unter der Vorgabe einer begrenzten seitlichen Verschiebung ($\Delta_{max}$) während der Korrektur minimiert wird.

5. Verfahren nach einem der vorhergehenden Ansprüche, **dadurch gekennzeichnet, dass** während des Rechenschritts die seitliche Geschwindigkeit unter der Vorgabe einer begrenzten maximalen seitlichen Geschwindigkeit ($\nabla_{max}$) während der Korrektur minimiert wird.

6. Verfahren nach einem der vorhergehenden Ansprüche, **dadurch gekennzeichnet, dass** es einen Schritt der Kalibrierung der Korrekturverstärkung (K) abhängig von mindestens zwei unterschiedlichen Korrekturphasen (Phase 1, Phase 2) der Spur enthält.

7. Verfahren nach Anspruch 6, **dadurch gekennzeichnet, dass** es die Verwendung der gleichen Korrekturverstärkung (K) für die zwei Korrekturphasen der Spur und den Schritt der Gewichtung der Korrekturverstärkung (K) mit einem Gewichtungsfaktor für eine der zwei Korrekturphasen der Spur enthält.

8. Verfahren nach Anspruch 6, **dadurch gekennzeichnet, dass** es den Schritt der Berechnung einer unterschiedlichen Korrekturverstärkung (K) für jede der zwei Korrekturphasen der Spur enthält.

9. Vorrichtung zur Korrektur der Spur eines Kraftfahrzeugs (1), das sich auf einem Fahrstreifen bewegt, die ein aktives Lenksystem, das auf den Einschlagwinkel der gelenkten Vorderräder des Fahrzeugs einwirkt, eine das Fahrzeug bestückende Kamera, die Bildverarbeitungseinrichtungen zugeordnet ist, um mindestens einen Messwert des seitlichen Abstands ($Y_L$) des Fahrzeugs bezüglich einer Markierung auf dem Fahrstreifen und einen Messwert des relativen Kurswinkels ($\Psi_L$) zu liefern, der dem Winkel zwischen der Längsachse des Fahrzeugs und einer Linie des Fahrstreifens entspricht, und eine Steuereinheit enthält, die das aktive Lenksystem steuert, um die Spur abhängig von einer Korrekturverstärkung (K) zu korrigieren, die abhängig von mindestens dem gemessenen seitlichen Abstand ($Y_L$) und dem gemessenen relativen Kurswinkel ($\Psi_L$) berechnet wird, und ausgehend von der ein Steuersollwert (u) generiert wird, der an das aktive Lenksystem anzuwenden ist, **dadurch gekennzeichnet, dass** sie Einrichtungen zur Berechnung (10) der Korrekturverstärkung (K) enthält, die in der Lage sind, eine Mehrkriterien-Optimierung durch Suche des Minimums für jedes der folgenden Kriterien unter einer seitlichen Verschiebung auf dem Fahrstreifen, einem Einschlagwinkel ($\sigma_f$) an den Rädern des Fahrzeugs und der seitlichen Geschwindigkeit des Fahrzeugs während der Spurkorrektur auszuführen.

**10.** Kraftfahrzeug, das eine Vorrichtung nach Anspruch 9 enthält.

**Claims**

**1.** Method for correcting the trajectory of a motor vehicle travelling in a traffic lane, designed to keep the vehicle in the lane, said method comprising a step of measuring the lateral distance between the vehicle ($Y_L$) and a marking on the traffic lane and a step of measuring the relative bearing angle ($\Psi_L$) corresponding to the angle between the longitudinal axis of the vehicle and a line of the traffic lane, using at least one camera fitted to the vehicle, and a step of calculating (10) at least one correction gain (K) as a function of at least the measured lateral distance ($Y_L$) and the measured relative bearing angle ($\Psi_L$), and from which a command setpoint (u) to be applied to an actuator acting on the steering angle ($\delta_f$) of the steering front wheels of the vehicle is generated,
the method being **characterized in that** the step of calculating the correction gain (K) comprises a step of multicriteria optimization by searching for the minimum for each of the following criteria: lateral displacement in the traffic lane, a steering angle at the wheels of the vehicle and the lateral velocity of the vehicle, during the trajectory correction.

**2.** Method according to Claim 1, **characterized in that** during the calculation step the steering angle is minimized under the constraint of a maximum steering angle which is smaller than a maximum saturation value of the steering angle.

**3.** Method according to Claim 1, **characterized in that** during the calculation step the multicriteria optimization is carried out with a saturated steering angle at a maximum saturation value of the steering angle under the constraint of a stable and robust correction of the trajectory.

**4.** Method according to any one of the preceding claims, **characterized in that** during the calculation step the lateral displacement is minimized under the constraint of a limited maximum lateral displacement ($\Delta_{max}$) during the correction.

**5.** Method according to any one of the preceding claims, **characterized in that** during the calculation step the lateral velocity is minimized under the constraint of a limited maximum lateral velocity ($\nabla_{max}$) during the correction.

**6.** Method according to any one of the preceding claims, **characterized in that** it comprises a step of calibrating the correction gain (K) as a function of at least two distinct trajectory correction phases (Phase 1, Phase 2).

**7.** Method according to Claim 6, **characterized in that** it comprises the use of the same correction gain (K) for both trajectory correction phases and the step of weighting the correction gain (K) with a weighting factor for one of the two trajectory correction phases.

**8.** Method according to Claim 6, **characterized in that** it comprises the step of calculating a different correction gain (K) for each of the two trajectory correction phases.

**9.** Device for correcting the trajectory of a motor vehicle (1) travelling in a traffic lane, comprising an active steering system that acts on the steering angle of the steering front wheels of the vehicle, a camera which is fitted to the vehicle and is linked to image processing means to provide at least one measure of the lateral distance ($Y_L$) between the vehicle and a marking on the traffic lane and a measure of the relative bearing angle ($\Psi_L$) corresponding to the angle between the longitudinal axis of the vehicle and a line of the traffic lane, a control unit that controls the active steering system to correct the trajectory as a function of a correction gain (K) calculated as a function of at least the measured lateral distance ($Y_L$) and the measured relative bearing angle ($\Psi_L$), and from which a command setpoint (u) to be applied to the active steering system is generated, **characterized in that** it comprises means (10) for calculating the correction gain (K) which are able to carry out multicriteria optimization by searching for the minimum of each of the following criteria: lateral displacement in the traffic lane, a steering angle ($\delta_f$) at the wheels of the vehicle and the lateral velocity of the vehicle, during the trajectory correction.

10. Motor vehicle comprising a device according to Claim 9.

Fig.1

Phase 1 | Phase 2

$\Delta_{max}$

$y_{L\_max}$

LKA
Activation

$y_L$

$\nabla_{max}$

Ligne cible

Médiane de la voie

**Fig.2**

$X_3 = \psi_L$

$(-y_L{}^N, \psi_L{}^N)$    $\psi_L{}^N$    $(y_L{}^N, \psi_L{}^N)$

$X_o$

$X_4 = y_L$

$-y_L{}^N$    $-y_L{}^N$

$(-y_L{}^N, -\psi_L{}^N)$    $-\psi_L{}^N$    $(y_L{}^N, -\psi_L{}^N)$

**Fig.4**

$L/2$    $L/2$

$L_1$

$d$    $d$

$L_2$

$y_L$

2

$l_s$   $\psi_L$   $y_d$

$l_f$

$y_g$

CG   1

**Fig.5**

20

Fig.3

$(r(k), \psi_L(k), y_L(k))$

Angle
volant

Angle
volant

Vitesse
lacet (r)

Vitesse

Observateur
angle
de dérive

$\hat{\beta}(k)$

Correcteur
haut
niveau

Angle
souhaité
u

Correcteur
bas
niveau

$T_{LKA}$

30

11

10

20

Conducteur

$T_{Conducteur}$

$\rho_{ref}$

Infos véhicule et route

EP 3 344 506 B1

## RÉFÉRENCES CITÉES DANS LA DESCRIPTION

**Documents brevets cités dans la description**

- EP 1790512 A
- KR 100851120
- US 7580785 B
- WO 2014006327 A
- FR 2992931
- FR 2991276
- WO 2005061305 A

**Littérature non-brevet citée dans la description**

- **PAOLO FALCONE ; FRANCESCO BORRELLI ; JAHAN ASGARI ; HONGTEI ERIC TSENG ; DAVOR HROVAT.** Prédictive Active Steering Control for Autonomous Vehicle Systems. *IEEE TRANSACTIONS ON CONTROL SYSTEMS TECHNOLOGY,* Mai 2007, vol. 15 (3), 566-580
- **PROFESSEUR RAJESH RAJAMANI.** Vehicle Dynamics and Control. Springer
- **J. M. GOMES DA SILVA JR. ; S. TARBOURIECH.** Anti-windup design with guaranteed régions of stability: An LMI-based approach. *IEEE Transaction on Automatic Control,* 2005, vol. 50 (1), 106-111
- **M. CHILALI ; P. GAHINET.** Hinf Design with Pole Placement Constraints: An LMI Approach. *IEEE Transactions on Automatic Control,* 1996, vol. 41 (3), 358-367